# EUROPEAN PATENT SPECIFICATION

(11) **EP 3 815 201 B1**
(45) Date of publication and mention of the grant of the patent: **26.06.2024**
(21) Application number: 19745724.5
(22) Date of filing: 27.06.2019
(51) Int. Cl.: H01S 3/16, H01S 3/094, H01S 3/083, H01S 3/08, H01S 3/13, H01S 3/0941, H01S 3/00, H01S 3/10, H01S 3/23, H01S 3/08031, H01S 3/08045

(54) **LASER SYSTEM FOR COHERENTLY COMBINING MULTIPLE LASER SOURCES**
LASERSYSTEM ZUR KOHÄRENTEN KOMBINATION MEHRERER LASERQUELLEN
SYSTÈME LASER POUR COMBINER DE MANIÈRE COHÉRENTE DE MULTIPLES SOURCES LASER

(30) Priority: 29.06.2018 GB 201810706
(43) Date of publication of application: 05.05.2021
(73) Proprietor: M Squared Lasers Limited, Glasgow, Strathclyde G20 0SP (GB)
(72) Inventor: MALCOLM, Graeme, GLASGOW Strathclyde G20 0SP (GB); MAKER, Gareth, GLASGOW Strathclyde G20 0SP (GB); WEBSTER, Stephen, GLASGOW Strathclyde G20 0SP (GB)
(74) Representative: Fulton, David James
(86) International application number: PCT/GB2019/051831
(87) International publication number: WO 2020/002933

(56) References cited:
- WO-A1-2019/073202
- WO-A1-2019/150097
- WO-A2-03/049239
- US-A- 5 027 360
- US-A1- 2017 244 215
- US-B1- 6 483 858
- HOLGER MUELLER ET AL: "Phase-Locked, Low-Noise, Frequency Agile Titanium: Sapphire Lasers for Simultaneous Atom Interferometers", ARXIV.ORG, CORNELL UNIVERSITY LIBRARY, 201 OLIN LIBRARY CORNELL UNIVERSITY ITHACA, NY 14853, 27 July 2005 (2005-07-27), XP080202710, DOI: 10.1364/OL.31.000202
- WINKELMANN L ET AL: "Injection-locked single-frequency laser with an output power of 220 W", APPLIED PHYSICS B ; LASERS AND OPTICS, SPRINGER, BERLIN, DE, vol. 102, no. 3, 11 February 2011 (2011-02-11), pages 529-538, XP019886481, ISSN: 1432-0649, DOI: 10.1007/S00340-011-4411-9 cited in the application
- VASA N J ET AL: "COMPARATIVE STUDY OF SPECTRAL NARROWING OF A PULSED TI:SAPPHIRE LASER USING PULSED AND CW INJECTION SEEDING", APPLIED PHYSICS B: LASERS AND OPTICS, SPRINGER INTERNATIONAL, BERLIN, DE, vol. B62, no. 1, January 1996 (1996-01), pages 51-57, XP000551456, ISSN: 0946-2171, DOI: 10.1007/BF01081247
- Optics Communication, vol. 35, no. 3, 1980, pages 441-444,
- Applied Physics. B, vol. 31, 1983, pages 97-105,

## Description

The present invention relates to the field of lasers and, in particular, to a laser system for coherently combining multiple laser sources.

There exist a number of applications that require a higher power laser source, generated within in a single beam, that also exhibits very low noise properties. Such an application is the optical trapping of atoms. Here, an induced dipole force generated by a laser source acts on the atoms located within its output field causing them to be attracted to (repelled from), and trapped at, the maximum (or minimum) in intensity of the output field (a kind of optical tweezer). The higher the power within the output field, the greater the depth of the trap, hence, the desire for a high power laser source. Any perturbation of the generated light field (i.e. mode fluctuations and other residual noise) gives rise to unwanted motion, or heating, of the atoms. It is therefore desirable for the high power laser source to also exhibit low noise. Thus, the combination of high power and low noise is ideal for optical trapping applications. Optical traps may be employed for the emulation of crystalline, solid-state systems since the atoms are trapped in a highly configurable light field. Optical traps are also employed within optical clocks, quantum computing, optical tweezers and quantum optics experiments.

A number of laser systems are known in the art that provide a means for coherently summing the output optical fields produced by two or more independent gain media. For example, US patent number US 4,649,351 discloses a laser system within which a diffraction grating is employed to combine the output optical fields generated by a plurality of lasers. The diffraction grating is configurated to generate, upon illumination, substantially equal intensities of diffraction orders corresponding to the number of lasers while suppressing higher unwanted orders. Phase locking of the plurality of lasers may be accomplished by employing an independent single master laser to generate a reference beam for each laser via the diffraction grating.

US patent number US 4,757,268 discloses a laser system wherein a pulsed output from a master laser source is split by a series of mirrors and reflective prisms to enable the simultaneous driving of a plurality of laser gain elements. A phase conjugate reflector, operatively coupled to the gain elements, reflects the phase conjugate of the amplified radiation back into the gain elements where it is further amplified. An output coupler then couples the amplified radiation from the plurality of gain elements out of the laser system to form as a single coherent output.

An alternative laser system for coherently combining multiple laser devices is disclosed in US patent publication number US 2004/165620. Here, the laser devices comprise optical fibres with laser active regions. Each of the fibres has a reflector disposed at one end and is connected to an optical combiner on the other end. The optical combiner acts to combine the output produced within each of the optical fibres to form a single coherent output.

In US patent publication number US 2009/296751 the laser system comprises a plurality of semiconductor diode lasers that are phase-locked by direct current injection. The optical output of each diode laser is then amplified by fibre amplifiers and thereafter combined by a beam combining module, comprising multiple beam splitter plates, to form a single coherent output beam.

These above described laser systems are not particularly efficient due to the number of optical components involved within the laser systems and thus the powers that can be produced are significantly limited. In addition, the output optical fields generated by these laser systems are known to be of poor mode quality, particularly where multiple outputs are combined in an array rather than in a single beam, and exhibit high noise levels due to the presence of the multiple optical components required to combine the outputs of the individual laser sources. As a result, these laser systems do not lend themselves for use within the above described high power, low noise applications.

Higher power, lower noise laser systems based on injection locking monolithic, unidirectional single-mode Nd:YAG ring lasers (NPRO) are known in the art for use within free space communication, see for example SPIE Proceedings Volume 1417. Free-Space Communication Technologies III (June 1991) entitled "Injection chaining of diode-pumped single-frequency ring lasers for free-space communication" in the name of Cheng et al. This paper discloses the injection locking of an NPRO laser (the slave laser) to the continuous-wave single-frequency output generated by a separate NPRO laser (the master laser). The output of the injection locked NPRO laser (the slave laser) may then be employed to injection lock a third NPRO laser. The output power of each NPRO laser is in the range of 300 milliwatts to 350 milliwatts at the normal operating wavelength of 1064nm for Nd:YAG. When arranged in the above described manner, the disclosed laser system provides a single frequency output having a power in the range of 750 milliwattts to 1 Watt at 1064nm. In practice, it is found that such systems are very sensitive and are not particularly stable.

US patent number US 5,027,360 discloses a solution for increasing the stability of the aforementioned Nd:YAG injection locked laser systems. The solution provided by, US patent number US 5,027,360 is to employ an NPRO laser (the master laser), having a power in the range of 30 to 40 milliwatts at 1064nm, to injection lock a traditional Nd:YAG ring cavity laser to produce an output field from the system having a power as high as 13 Watts at 1064nm. The system further comprises a servo-loop control system employed to maintain the injection-locked condition. This is achieved by generating an error signal that is indicative of fluctuations within the slave laser cavity and employing this error signal to adjust the length of the slave laser cavity to maintain the locked condition. In practice, it is found that the power generated by the laser system disclosed in US patent number US 5,027,360 is limited to that which can be produced by the Nd:YAG ring cavity laser since increasing the power of the NPRO laser (the master laser) leads to a decrease in overall stability of the system.

There exist a number of low noise applications that require higher powers than are achievable from the above described Nd:YAG based injection locked laser systems, for example laser system for gravitational wave detectors. An example of such a system is disclosed within Applied Physics B, March 2011, Volume 102, Issue 3, pages 529-538 entitled *"*Injection-locked single-frequency laser with an output power of 220 W" in the name of Winkelmann et al. Here an NPRO laser with 2 W output power is amplified by a four-head Nd:YVO laser amplifier to a power level of 35 Watts. The light from the Nd:YVO laser amplifier then injection locks a Nd:YAG oscillator. The Nd:YAG oscillator consists of four end-pumped Nd:YAG crystals arranged within a single ring resonator resulting in output powers as high as 220 Watts at 1064nm.

HOLGER MUELLER ET AL:"Phase-Locked, Low-Noise, Frequency Agile Titanium: Sapphire Lasers for Simultaneous Atom Interferometers", arXiv.org, CORNELL UNIVERSITY LIBRARY, 201 OLIN LIBRARY, CORNELL UNIVERSITY ITHACA, NY 14853, 27 July 2005, discloses a laser system consisting of a > 1.6W titanium:sapphire laser phase-locked to another free-running one at a wavelength of 852 nm with a phase noise of -138 dBc/Hz at 1 MHz from the carrier, using an intra-cavity electro-optic phase modulator. The system can change the offset frequency phase continuously within 200 ns with frequency steps up to 4MHz. Use of the ultra-low phase noise is described for simultaneous atom interferometers in differential measurements.

### Summary of Invention

It is therefore an object of an embodiment of the present invention to obviate or at least mitigate the foregoing disadvantages of the injection-locked laser system known in the art.

It is a further object of an embodiment of the present invention to provide an alternative laser system to those known in the art for generating a high power output field.

A yet further object of an embodiment of the present invention to provide a laser system which generates an output field of increased operating wavelength flexibility when compared with those laser systems known in the art.

According to a first aspect of the present invention there is provided a laser system comprising:
a master laser, the master laser comprising a Ti:sapphire gain medium that generates a first continuous-wave output field having a first frequency (f₁) and a first power (P₁), and
a first resonant ring cavity slave optical amplifier, the first resonant ring cavity slave optical amplifier comprising a Ti:sapphire gain medium that, when free running, generates a second continuous-wave output field having a second frequency (f₂) and a second power (P2),
characterised in that
the first resonant ring cavity slave optical amplifier (5) is configured such that a fraction of the first continuous-wave output field is injected into the first resonant ring cavity slave optical amplifier to seed the first resonant ring cavity slave optical amplifier resulting in the second continuous-wave output field having the same frequency (f₁) as the first continuous-wave output field and a remainder of the first continuous-wave output field is combined with the second continuous-wave output field forming a single output field for the laser system at the first frequency (f₁) and a power (Pₒᵤₜ) substantially equal to the sum of the first (P₁) and the second (P₂) powers.

The above arrangement provides a solid-state laser system having a high power, low noise single output field, namely the second continuous-wave output field that exhibits a single transverse and longitudinal mode, single polarisation and a high phase-coherence with the first continuous-wave output field. Most significantly, the wavelength of the single output field is tuneable over a 400 nm wavelength range (around 660 nm to 1060nm) as controlled by the operating wavelength of the first laser. This makes the laser system particularly suited for employment within an optical trap.

It is preferable for the second power (P₂) to be similar to the first power (P₁) i.e. in the range 0.5 P₁ < P₂ < 1.5 P₁.

Most preferably, the first power (P₁) is greater than or equal to 1 Watt. Preferably, the first power (P₁) is greater than or equal to 4 Watts.

Preferably the laser system further comprises a first injection locking module located within an optical path between the master laser and the first optical amplifier wherein the injection locking module provide a means for ensuring that the mode of the first continuous-wave output field matches that of the first optical amplifier.

Most preferably the laser system further comprises a first optical isolator located within an optical path between the master laser and the first optical amplifier. Optionally the first optical isolator comprises one or more dichroic mirrors.

Most preferably the laser system further comprises a first frequency lock control loop to frequency lock the second continuous-wave output field to the frequency of the first continuous-wave output field.

Optionally, the laser system further comprises a second resonant ring cavity slave optical amplifier comprising a Ti:sapphire gain medium that, when free running, generates a third continuous-wave output field having a third frequency (f₃) and a third power (P₃) wherein the second resonant ring cavity slave optical amplifier is configured such that a fraction of the combined first and second continuous-wave output fields is injected into the second resonant ring cavity slave optical amplifier to seed the second resonant ring cavity slave optical amplifier resulting in the third continuous-wave output field having the same frequency (f₁) as the first continuous-wave output field and a remainder of the combined first and second continuous-wave output fields is combined with the third continuous-wave output field forming a single output field for the laser system at the first frequency (f₁) and a power (Pₒᵤₜ) substantially equal to the summation of the first (P₁), second (P₂) and third (P₃) powers.

The above arrangement provides a laser system having a single output field, namely the third continuous-wave output field that exhibits a single transverse and longitudinal mode, single polarisation and a high phase-coherence with the first and second continuous-wave output field. The single output field exhibits a power level which is effectively the sum of the powers of the first, second and third continuous-wave output fields. Most significantly, the wavelength of the single output field is again tuneable over a 400 nm wavelength range (around 660 nm to 1060nm) as controlled by the operating wavelength of the first laser.

Preferably the laser system further comprises a second injection locking module located within an optical path between the first and second optical amplifiers wherein the second injection locking module provides a means for ensuring that the mode of the second continuous-wave output field matches that of the second optical amplifier.

Most preferably the laser system further comprises a second optical isolator located within an optical path between the first and second optical amplifiers. Optionally the second optical isolator comprises one or more dichroic mirrors.

Most preferably the laser system further comprises a second frequency lock control loop to frequency lock the third continuous-wave output field to the frequency of the second continuous-wave output field.

It will be appreciated than the laser system is easily scalable to include N optical amplifiers located in series with the first laser which will generate a single output field having a power which is effectively the sum of the powers of the output fields from the first laser and the N optical amplifiers. The system would therefore preferably comprise an injection locking module and or an optical isolator located within the optical paths between these components. In addition, it is preferable that each optical amplifier comprise a frequency lock control loop to frequency lock the optical amplifiers to the previous optical amplifier in the series.

According to a second aspect of the present invention there is provided a method of combining two or more optical fields the method comprising:
providing a master laser comprising a Ti:sapphire gain medium to generate a first continuous-wave output field having a frequency (f₁) and a first power (P₁);
providing a first resonant ring cavity slave optical amplifier comprising a Ti:sapphire gain medium to generate, when free running, a second continuous-wave output field having a second frequency (f₂) and a second power (P₂); and
characterised by
configuring the first resonant ring cavity slave optical amplifier to inject a fraction of the first continuous-wave output field into the first resonant ring cavity slave optical amplifier to seed the first resonant ring cavity slave optical amplifier causing the second continuous-wave output field to have the same frequency (f₁) as the first continuous-wave output field and a combining a remainder of the first continuous-wave output field with the second continuous-wave output field to form a single output field for the laser system at the first frequency (f₁) and a power (Pₒᵤₜ) substantially equal to the sum of the first (P₁) and the second (P₂) powers.

It is preferable for the second power (P₂) to be similar to the first power (P₁) i.e. in the range 0.5 P₁ > P₂ < 1.5 P₁.

Most preferably, the first power (P₁) is greater than or equal to 1 Watt. Preferably, the first power (P₁) is greater than or equal to 4 Watts.

Preferably the method of combining two or more optical fields further comprises matching the mode of the first continuous-wave output field to that of the first resonant ring cavity slave optical amplifier.

Most preferably the method of combining two or more optical fields further comprises optically isolating the master laser from the first resonant ring cavity slave optical amplifier.

Most preferably the method of combining two or more optical fields further comprises frequency locking the first resonant ring cavity slave optical amplifier to the first continuous-wave output field.

Optionally, the method of combining two or more optical fields further comprises providing a second resonant ring cavity slave optical amplifier comprising a Ti:sapphire gain medium to generate, when free running, a third continuous-wave output field having a third frequency (f₃) and a third power (P₃) configuring the second resonant ring cavity slave optical amplifier such that a fraction of the combined first and the second continuous-wave output fields is injected into the second resonant ring cavity slave optical amplifier to seed the second resonant ring cavity slave optical amplifier resulting in the third continuous-wave output field having the same frequency (f₁) as the first continuous-wave output field and combining a remainder of the combined first and second continuous-wave output fields with the third continuous-wave output field to form a single output field for the laser system at the first frequency (f₁) and a power (Pₒᵤₜ) substantially equal to the summation of the first (P₁), second (P₂) and third (P₃) powers.

Preferably the method of combining two or more optical fields further comprises matching the mode of the second continuous-wave output field to that of the second resonant ring cavity slave optical amplifier.

Most preferably the method of combining two or more optical fields further comprises optically isolating the first optical amplifier from the second optical amplifier.

Most preferably the method of combining two or more optical fields further comprises frequency locking the second optical amplifiers to the second continuous-wave output field.

Embodiments of the second aspect of the present invention may comprise features to implement the preferred or optional features of the first aspect of the present invention or vice versa.

### Brief Description of Drawings

There will now be described, by way of example only, various embodiments of the invention with reference to the drawings, of which:
Figure 1 presents a schematic representation of a laser system in accordance with an embodiment of the present invention;
Figure 2 presents a schematic representation of:
   (a) an optical amplifier employed within the laser system of Figure 1 and
   (b) an alternative optical amplifier employed within the laser system of Figure 1;
Figure 3 presents a schematic representation of a laser system in accordance with an alternative embodiment of the present invention; and
Figure 4 presents a schematic representation of a laser system in accordance with a further alternative embodiment of the present invention.

In the description which follows, like parts are marked throughout the specification and drawings with the same reference numerals. The drawings are not necessarily to scale and the proportions of certain parts have been exaggerated to better illustrate details and features of embodiments of the invention.

### Detailed Description

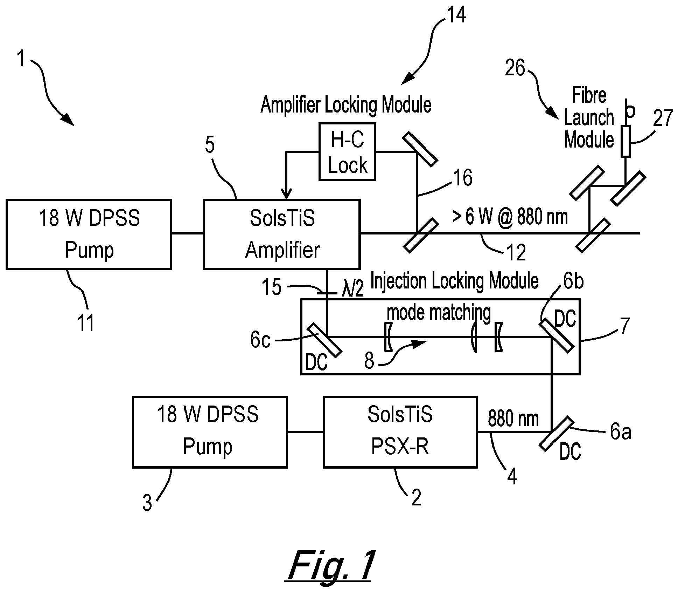

Details of the laser system will now be described with reference to Figure 1. In particular, Figure 1 presents a schematic representation of a laser system in accordance with a first embodiment of the present invention, as generally depicted by reference numeral 1.

The laser system 1 can be seen to comprise a Ti:sapphire laser 2 employed as the master (or seed) laser within the system 1. The master Ti:sapphire lasers 2 is optically pumped at 532 nm by a dedicated continuous wave diode-pumped solid-state (DPSS) laser source 3 to produce a continuous-wave output field 4. The applicant's proprietary SolsTiS^{®} laser is a suitable example of a Ti:sapphire laser for use as the master laser 2 while the pump laser 3 may comprise a commercially available diode-pumped solid-state (DPSS) laser.

The pump laser 3 has the capability of providing up to ~18 Watts of pump power to the master Ti:sapphire laser 2. In the presently described embodiment, the pump laser 3 is arranged to provide ~18 W of pump power to the master Ti:sapphire laser 2 to provide a tuneable continuous-wave output field 4 (tuneable between 660nm and 1060nm) with a power of around ~4.7 W at 880nm. Due to the presence of a number of intracavity elements (e.g. etalons) and control electronics the generated tuneable continuous-wave output field 4 operates at a single frequency (f₀), as a single transverse and longitudinal mode and exhibits low phase noise. In practice, the quality of the output field 4 can be maintained when the master Ti:sapphire laser 2 is configured to operate at a power as low as 400 milliwatts.

As can be seen from Figure 1, the continuous-wave output field 4 is injected into a first optical amplifier 5 i.e. the continuous-wave output field 4 is employed as a seed optical field for the first optical amplifier 5 resulting in the first optical amplifier 5 being slaved to the master Ti:sapphire laser 2. A first dichroic mirror 6a is employed to redirect the seed optical field 4 into the first optical amplifier 5.

It is preferable for an injection locking module 7 to also be located within the optical path between the master Ti:sapphire laser 2 and the slave optical amplifier 5. The injection locking module can be seen to comprise beam shaping optics 8 located between two dichroic mirrors 6b and 6c. The combined effects of the beam shaping optics 8 provide a means for ensuring that the mode of the seed optical field 4 matches that of the slave optical amplifier 5.

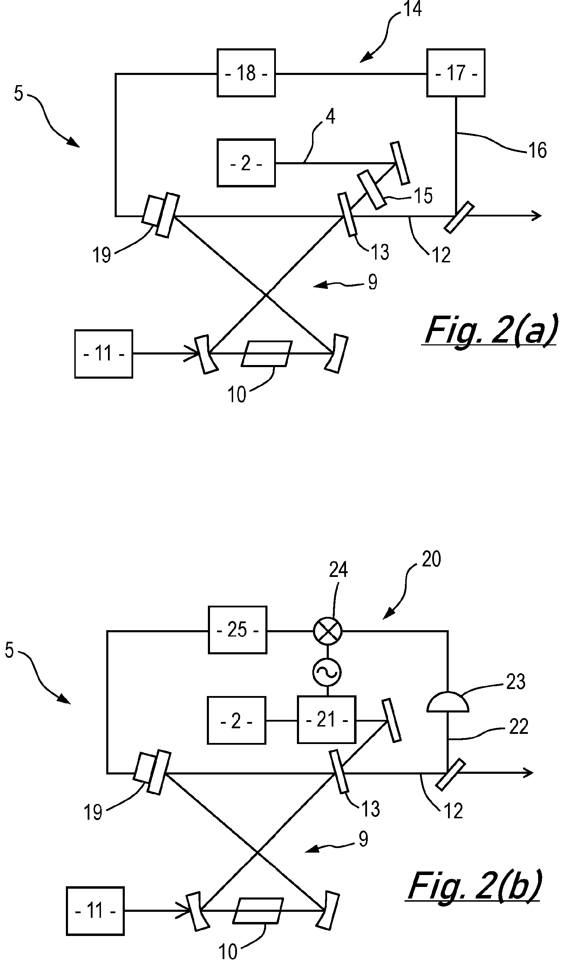

Figure 2(a) presents a schematic representation of the first optical amplifier 5 employed within the laser system 1. The first optical amplifier 5 comprises a ring cavity 9 within an arm of which is located a Ti:sapphire gain medium 10 , the Ti:sapphire gain medium 10 being optically pumped at 532 nm by a dedicated continuous wave DPSS laser source 11 to produce a continuous-wave output field 12. The applicant's proprietary SolsTiS^{®} amplifier is an example of a suitable optical amplifier 5 for use within the laser system 1. Unlike the master Ti:sapphire laser 2, the first optical amplifier 5 comprises no additional intracavity elements. Therefore, in the absence of the seed optical field 4 the first optical amplifier 5 is effectively free running, and thus produces a bi-directional output at 770nm when pumped at 532 nm by the dedicated continuous wave DPSS laser source 11. In the presently described embodiment the pump laser 11 is arranged to provide ~18 W of pump power to the Ti:sapphire laser 5.

The cavity of the first optical amplifier 5 is arranged to be resonant at the frequency (f₀) of seed optical field 4, namely the 880 nm output field 4. As described above, the continuous-wave output field 4 is employed as a seed optical field for the first optical amplifier 5. This is achieved by arranging for the continuous-wave output field 4 to be incident upon the output coupler 13 of the first optical amplifier 5. As a result, a fraction the optical field 4 enters the ring cavity 9 of the first optical amplifier 5 while the remainder is reflected from the output coupler 13 of the first optical amplifier 5.

The fraction of the output field 4 that enters the ring cavity 9 acts as a "seed" for the first optical amplifier 5. This "seed" results in stimulated emission within the first optical amplifier 5 at the same frequency as the output field 4 of the master Ti:sapphire laser 2, as well as causing the first optical amplifier 5 to operate in a unidirectional manner.

The fraction of the seed optical field 4 entering the ring cavity 9, and amplified therein, is also in phase with that reflected from the output coupler 13, thus ensuring temporal phase coherence between the seed optical field 4 and the output field 12 of the first optical amplifier 5.

Spatial phase-coherence between the fraction of the optical field 4 which is reflected from the output coupler 13, and that which is amplified within the ring cavity 9, is ensured by having a high degree of mode-matching between the seed optical field 4 and the output field 12 of the optical amplifier 5. The injection locking module 7 is employed to assist with mode-matching the seed optical field 4 to the output field 12

The output field 12 of the optical amplifier 5 is therefore combined with the output field 4 of the master Ti:sapphire laser 2 such that the laser system 1 provides a single output exhibiting a single transverse and longitudinal mode Gaussian beam, that exhibits a single polarisation and a high phase-coherence with the seed optical field 4 i.e. their frequencies are in phase to << 1 cycle of the waveform. The output field 12 has a power ~9.4 W which is effectively the sum of the powers of the output field 4 of the master Ti:sapphire laser 2 and the output field 12 of the first optical amplifier 5. Most significantly, the wavelength of the output field 12 is tuneable over a 400 nm wavelength range (around 660 nm to 1060nm) as controlled by the operating wavelength of the master Ti:sapphire laser 2. By comparison the Nd:YAG laser systems of the prior art are only tuneable over a range of around 0.05nm. Thus, unlike the Nd:YAG laser systems of the prior art the present laser system 1 able to be employed within optical traps where it is necessary to be able to tune the laser source to different atomic wavelengths depending on the particular atom required to be trapped e.g. Barium, Beryllium, Caesium, Magnesium, Rubidium, Strontium and Ytterbium.

Since the first optical amplifier 5 is a resonant device, and as explained above, injection locking occurs when the seed optical field 4 is in resonance with the ring cavity 9 of the optical amplifier 5, it is beneficial for the stable operation of the laser system 1 to frequency lock the resonance condition of the first optical amplifier 5 to the seed optical field 4.

In the embodiment presented in Figure 2(a) a preferred frequency lock control loop 14 based on the Hänsch-Couillaud technique is employed to achieve the desired frequency locking. This technique was first described in Optics Communication Volume 35, Issue 3, pages 441 to 444 (1980) and exploits the fact that the Ti:sapphire gain medium 10 of the first optical amplifier 5 is Brewster cut crystal. As a result, there exists an asymmetry in the two orthogonal polarisation components of the resonance frequency. To exploit this fact, a half-wave plate 15 is employed to introduce an offset to the polarisation of the fraction of the the seed optical field 4 that enters the ring cavity 9 to introduce a component of polarisation orthogonal to the plane of incidence to the Brewster-cut Ti:sapphire gain medium 10. A component 16 of the output field 12 is then directed towards a polarisation analyser 17 employed to detect dispersion shaped resonances which can provide an error signal generated by locking electronics 18 for electronic frequency stabilisation via a piezo-mounted cavity mirror 19.

In an alternative embodiment presented in Figure 2(b) a frequency lock control loop 20 based on the Pound-Drever-Hall technique is employed to achieve the desired frequency locking. This technique is described in Applied Physics. B, Volume 31, Pages 97 to 105 (1983). In this technique a frequency modulator 21 applies a frequency-modulation to the seed optical field 4 that is detected within a component 22 of the output field 12 by a photodiode 23. This frequency modulated signal is then demodulated by via a frequency mixer 24 to generate an error signal. Frequency locking electronics 25 then provide a correction signal for electronic frequency stabilisation via the piezo-mounted cavity mirror 19.

It should be noted that the above described frequency locking techniques of the optical amplifiers 5 do not themselves provide for phase-coherence between the seed optical field 4 and the output field 12. Instead, phase coherence is a direct result of the amplification process within the first optical amplifier 5. The frequency locking techniques merely ensures that the frequency of the resonance of the first optical amplifier 5 remains coincident with the frequency of the seed optical field 4.

In order to confirm that the output field 12 comprises the combined output of the master laser 2 and the first optical amplifier 5 a fibre launch module 26 was employed to analyse the output field 12. As can be seen from Figure 1, a fraction of the output field 12 (~ 2%) is picked-off by employing a glass substrate before being coupled into a single mode fibre 27. A coupling efficiency of >80% through single mode fibre 27 served to demonstrate that the output field 12 occupies a single transverse spatial mode. In an independent measurement of beam quality, the M² value was found to be ≲ 1.1 which, again, demonstrates that the output field 12 occupies a single transverse spatial mode.

As discussed above, before injection locking has been achieved, the first optical amplifier 5, not containing any internal elements to force unidirectional operation, will operate bidirectionally, with half of its output power being directed back towards the master laser 2. However, the presence of the dichroic mirrors 6a, 6b and 6c prevent the backward going oscillation of the free running optical amplifier 5 at 770nm from returning to the master laser 2. Preferably the optical isolation provided by the dichroic mirrors 6a, 6b and 6c is capable of providing optical isolation of < -50 dB. This method of optically isolating the master laser 2 from the first optical amplifier 5 is particularly suited for laser systems where the wavelength of the output field of the free running optical amplifier 5 is significantly different (i.e. greater than 10 nm different) from the operating wavelength the master laser 2.

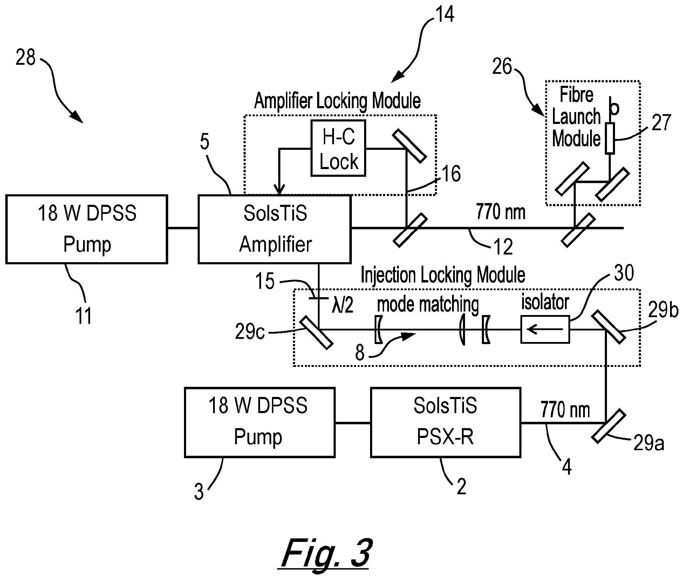

It will be appreciated by the skilled reader that an alternative form of optical isolation may be located between the master laser 2 and the optical amplifier 5. By way of example, Figure 3 presents an alternative laser system in accordance with a second embodiment of the present invention, as generally depicted by reference numeral 28. The laser system 28 presented in Figure 3 is similar to the laser system 1 described above, and presented in Figures 1 and 2, with the exception that the dichroic mirrors 6 are replaced by standard mirrors 29 and an optical isolator 30 is located within the optical path between the master laser 2 and the optical amplifier 5.

The above described laser systems 1 and 28 can provide a high power output field 12 (~9.4 W) which is greater than that which can be achieved by the independent operation of either the master laser 2 or the first optical amplifier 5. Most significantly, the wavelength of the output field 12 is tuneable over a 400 nm wavelength range (around 660 nm to 1060nm) as controlled by the operating wavelength of the master Ti:sapphire laser 2. This is around two orders of magnitude greater that the Nd:YAG laser systems known in the prior art e.g. those disclosed within US patent number US 5,027,360. This is achieved even though the power of output field 4 generated by the master laser 2 is at least one order of magnitude greater than those employed within the laser systems of US patent number US 5,027,360. The applicants have found that the decreased stability of employing a higher power master laser, although not acceptable within free space communication systems and gravitational wave detectors, is an acceptable trade off for an optical trap laser system where increased tuneability of the operating wavelength of the generated output field is highly beneficial.

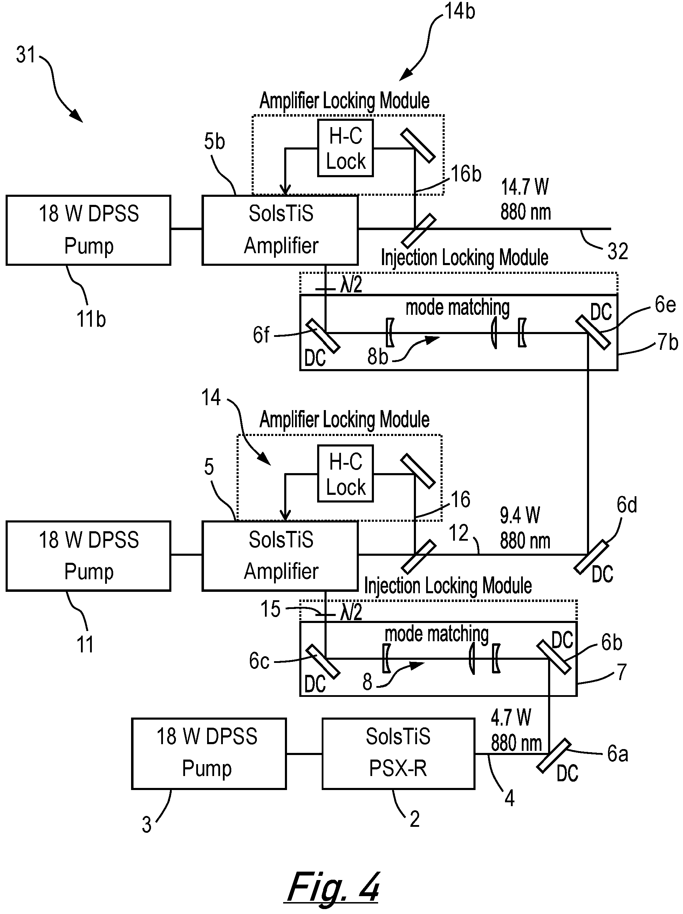

A further significant advantage of the laser systems 1 and 28 presented within Figure 1 to 3 is the fact that they are readily scalable through the inclusion of additional optical amplifiers 5. By way of example, Figure 4 presents an alternative laser system in accordance with an embodiment of the present invention, as generally depicted by reference numeral 31.

As can be seen from Figure 4, the continuous-wave output field 12 is now employed as a seed optical field for a second optical amplifier 5b i.e. the continuous-wave output field 12 is employed as a seed optical field for the second optical amplifier 5b resulting in the second optical amplifier 5b also being slaved to the master Ti:sapphire laser 2. A fourth dichroic mirror 6d is employed to redirect the optical field 12 into the second optical amplifier 5b.

It is again preferable for a second injection locking module 7b to also be located within the optical path between the first and second slave optical amplifiers 5 and 5b to ensure that the mode of the seed optical field 12 matches that of the second optical amplifier 5b. It is also beneficial for the stable operation of the laser system 31 to frequency lock the resonance condition of the second optical amplifier 5b to the seed optical field 12, in a similar manner to that described above.

The output field 32 of the second optical amplifier 5b is therefore combined with the output field 12 of the first optical amplifier 5b, and hence the output of the master Ti:sapphire laser 2, such that the laser system 31 provides a single output exhibiting a single transverse and longitudinal mode, single polarisation and a high phase-coherence with the first 4 and second 12 seed optical fields. Most significantly is the fact that the output field 32 has a power ~14 W which is effectively the sum of the powers of the output field 4 of the master Ti:sapphire laser 2, the output field 12 of the first optical amplifier 5 and the output field of the second optical amplifier 5b. Significantly, the wavelength of the output field 32 is again tuneable over a 400 nm wavelength range (around 660 nm to 1060nm) as controlled by the operating wavelength of the master Ti:sapphire laser 2.

It is envisaged that the above described laser system 1 could in fact be scaled up by to provide an output field having a power equal to the sum of the power of the output field 4 of the master laser 2 and N additional optical amplifiers 5.

A number of phase locked injection-locked laser system have also been disclosed. These systems have the advantage that they provide a single output exhibiting a single transverse and longitudinal mode, a single polarisation and a high phase-coherence with the respective seed optical fields. An advantage of the disclosed laser systems is the fact that the output field of the injection-locked laser system is highly scalable thus providing a means for increasing the power of the generated output field.

A further advantage of the disclosed laser system resides in the fact that the generated output field is tuneable over a 400 nm wavelength range (around 660 nm to 1060nm) as controlled by the operating wavelength of the master laser 2. This is a result of the fact that Ti;Sapphire gain media are employed within the master laser 2 and the one or more optical amplifiers 5 located in series with the master laser 2. By comparison Nd:YAG laser systems of the prior art are only tuneable over a range of around 0.05nm. Thus, unlike the Nd:YAG laser systems of the prior art the present laser system able to be employed within optical traps where it is necessary to be able to tune the laser source to different atomic wavelengths depending on the particular atom required to be trapped.

A method and system for combining two or more optical fields is disclosed. A first continuous-wave high powered output field generated by a solid-state master laser is injected into a first solid state optical amplifier to produce a single output field from the laser system that exhibits a high phase-coherence with the output field of the master laser. The power of the output field equals the sum of powers of the master laser and that generated by the first optical amplifier, while exhibiting similar beams characteristics to that produced by the output field of the master laser i.e. it exhibits low noise, in a single transverse and longitudinal mode Gaussian beam, and has a single polarisation. The laser system is highly scalable in that N optical amplifiers may be located in series with the master laser to provide a single low noise, high power output field.

Throughout the specification, unless the context demands otherwise, the term "comprise" or "include", or variations such as "comprises" or "comprising", "includes" or "including" will be understood to imply the inclusion of a stated integer or group of integers, but not the exclusion of any other integer or group of integers.

Furthermore, reference to any prior art in the description should not be taken as an indication that the prior art forms part of the common general knowledge.

The foregoing description of the invention has been presented for purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention as defined by the appended claims.

## Claims

1. A laser system (1, 31) comprising:
a master laser (2), the master laser (2) comprising a Ti:sapphire gain medium that generates a first continuous-wave output field (4) having a first frequency (f₁) and a first power (P₁), and
a first resonant ring cavity slave optical amplifier (5), the first resonant ring cavity slave optical amplifier (5) comprising a Ti:sapphire gain medium (10) within an arm thereof, that, when free running, generates a second continuous-wave output field (12) having a second frequency (f₂) and a second power (P₂),
**characterised in that**
the first resonant ring cavity slave optical amplifier (5) is configured such that a fraction of the first continuous-wave output field (4) is injected into the first resonant ring cavity slave optical amplifier (5) to seed the first resonant ring cavity slave optical amplifier (5) resulting in the second continuous-wave output field (12) having the same frequency (f₁) as the first continuous-wave output field (4) and a remainder of the first continuous-wave output field (4) is combined with the second continuous-wave output field (12) forming a single output field for the laser system (1, 31) at the first frequency (f₁) and a power (Pₒᵤₜ) substantially equal to the sum of the first (P₁) and the second (P₂) powers.

2. A laser system (1, 31) as claimed in claim 1 wherein the second power (P₂) is in the range 0.5 P₁ < P₂ < 1.5 P₁.

3. A laser system as claimed in either of claims 1 or 2 wherein the first power (P₁) is greater than or equal to 1 Watt or greater than or equal to 4 Watts.

4. A laser system (1, 31) as claimed in any of the preceding claims wherein the laser system (1) further comprises a first injection locking module (7) located within an optical path between the master laser (2) and the first resonant ring cavity slave optical amplifier (5) wherein the injection locking module(7) provides a means for ensuring that the mode of the first continuous-wave output field (4) matches that of the first resonant ring cavity slave optical amplifier (5).

5. A laser system (1, 31) as claimed in any of the preceding claims wherein the laser system (1) further comprises a first frequency lock control loop (14, 20) to frequency lock the second continuous-wave output field (12) to the frequency of the first continuous-wave output field (4).

6. A laser system (31) as claimed in any of the preceding claims wherein the laser system further comprises a second resonant ring cavity slave optical amplifier (5b) comprising a Ti:sapphire gain medium (10) that, when free running, generates a third continuous-wave output field (12b) having a third frequency (f₃) and a third power (P₃), wherein the second resonant ring cavity slave optical amplifier (5b) is configured such that a fraction of the combined first (4) and second (12) continuous-wave output fields is injected into the second resonant ring cavity slave optical amplifier (5b) to seed the second resonant ring cavity slave optical amplifier (5b) resulting in the third continuous-wave output field (12b) having the same frequency (f₁) as the first continuous-wave output field (4) and a remainder of the combined first (4) and second (12) continuous-wave output fields is combined with the third continuous-wave output field (12b) forming a single output field (32) for the laser system (1) at the first frequency (f₁) and a power (Pₒᵤₜ) substantially equal to the summation of the first (P₁), second (P₂) and third (P₃) powers.

7. A laser system (31) as claimed in claim 6 wherein the laser system (31) further comprises a second injection locking module (7b) located within an optical path between the first (5) and second (5b) optical amplifiers wherein the second injection locking module (7b) provides a means for ensuring that the mode of the combined first (4) and second (12) continuous-wave output fields matches that of the second optical amplifier (5b).

8. A laser system as claimed in either of claims 6 or 7 wherein the laser system further comprises a second frequency lock control loop (14b, 20b) to frequency lock the third continuous-wave output field (12b) to the frequency of the second continuous-wave output field (12).

9. A method of combining two or more optical fields (4. 12. 12b) the method comprising:
providing a master laser (2) comprising a Ti:sapphire gain medium to generate a first continuous-wave output field (4) having a frequency (f₁) and a first power (P₁);
providing a first resonant ring cavity slave optical amplifier (5) comprising a Ti:sapphire gain medium (10) within an arm thereof, to generate, when free running, a second continuous-wave output field (12) having a second frequency (f₂) and a second power (P₂); and
**characterised by**
configuring the first resonant ring cavity slave optical amplifier (5) to inject a fraction the first continuous-wave output field (4) into the first resonant ring cavity slave optical amplifier (5) to seed the first resonant ring cavity slave optical amplifier (5) causing the second continuous-wave output field (12) to have the same frequency (f₁) as the first continuous-wave output field (4) and a combining a remainder of the first continuous-wave output field (4) with the second continuous-wave output field (12) to form a single output field at the first frequency (f₁) and a power (Pₒᵤₜ) substantially equal to the sum of the first (P₁) and the second (P₂) powers.

10. A method of combining two or more optical fields (4. 12. 12b) as claimed in claim 9 wherein the second power (P₂) is in the range 0.5 P₁ < P₂ < 1.5 P₁.

11. A method of combining two or more optical fields (4. 12. 12b) as claimed in either of claims 9 or 10 wherein the method further comprises matching the mode of the first continuous-wave output field (4) to that of the first resonant ring cavity slave optical amplifier (5).

12. A method of combining two or more optical fields (4. 12. 12b) as claimed in any of claims 9 to 11 wherein the method further comprises frequency locking the first optical amplifier (5) to the frequency of the first continuous-wave output field (4).

13. A method of combining two or more optical fields (4. 12. 12b) as claimed in any of claims 9 to 12 wherein the method further comprises providing a second resonant ring cavity slave optical amplifier (5b) comprising a Ti:sapphire gain medium (10) to generate, when free running, a third continuous-wave output field (12b) having a third frequency (f₃) and a third power (P₃)
configuring the second resonant ring cavity slave optical amplifier (5b) such that a fraction of the combined first (4) and second (12) continuous-wave output fields is injected into the second resonant ring cavity slave optical amplifier (5b) to seed the second resonant ring cavity slave optical amplifier (5b) resulting in the third continuous-wave output field (12b) having the same frequency (f₁) as the first continuous-wave output field (4) and combining a remainder of the combined first (4) and second (12) continuous-wave output fields with the third continuous-wave output field (12b) forming a single output field (32) at the first frequency (f₁) and a power (Pₒᵤₜ) substantially equal to the summation of the first (P₁), second (P₂) and third (P₃) powers.

14. A method of combining two or more optical fields (4. 12. 12b) as claimed in claim 13 wherein the method further comprises matching the mode of the combined first (4) and second (12) continuous-wave output fields to that of the second optical amplifier (5b).

15. A method of combining two or more optical fields (4. 12. 12b) as claimed in either of claims 13 or 14 wherein the method further comprises frequency locking the second optical amplifier (5b) to the frequency of the second (12) continuous-wave output field.

## Patentansprüche

1. Ein Lasersystem (1, 31), das Folgendes umfasst:
einen Masterlaser (2), wobei der Masterlaser (2) ein Ti:Saphir-Verstärkungsmedium umfasst, das ein erstes Dauerstrich-Ausgangsfeld (4) mit einer ersten Frequenz (f₁) und einer ersten Leistung (P₁) erzeugt, und
einen ersten optischen Slave-Verstärker mit Resonanzringhohlraum (5), wobei der erste optische Slave-Verstärker mit Resonanzringhohlraum (5) ein Ti:Saphir-Verstärkungsmedium (10) in einem Arm davon umfasst, das im freien Betrieb ein zweites Dauerstrich-Ausgangsfeld (12) mit einer zweiten Frequenz (f₂) und einer zweiten Leistung (P₂) erzeugt,
**dadurch gekennzeichnet, dass**
der erste optische Slave-Verstärker mit Resonanzringhohlraum (5) so konfiguriert ist, dass ein Bruchteil des ersten Dauerstrich-Ausgangsfelds (4) in den ersten optischen Slave-Verstärker mit Resonanzringhohlraum (5) eingespeist wird, um den ersten optischen Slave-Verstärker mit Resonanzringhohlraum (5) anzuregen, was dazu führt, dass das zweite Dauerstrich-Ausgangsfeld (12) die gleiche Frequenz (f₁) wie das erste Dauerstrich-Ausgangsfeld (4) hat und ein Rest des ersten Dauerstrich-Ausgangsfelds (4) mit dem zweiten Dauerstrich-Ausgangsfeld (12) kombiniert wird und ein einziges Ausgangsfeld für das Lasersystem (1, 31) mit der ersten Frequenz (f₁) und einer Leistung (Pₒᵤₜ) bildet, die im Wesentlichen gleich der Summe der ersten (P₁) und der zweiten Leistung (P₂) ist.

2. Ein Lasersystem (1, 31) nach Anspruch 1, wobei die zweite Leistung (P₂) im Bereich 0,5 P₁ < P₂ < 1,5 P₁ liegt.

3. Ein Lasersystem nach einem der Ansprüche 1 oder 2, wobei die erste Leistung (P₁) größer oder gleich 1 Watt oder größer oder gleich 4 Watt ist.

4. Ein Lasersystem (1, 31) nach einem der vorhergehenden Ansprüche, wobei das Lasersystem (1) zudem ein erstes Injektionsverriegelungsmodul (7) umfasst, das sich in einem optischen Pfad zwischen dem Masterlaser (2) und dem ersten optischen Slave-Verstärker mit Resonanzringhohlraum (5) befindet, wobei das Injektionsverriegelungsmodul (7) ein Mittel bereitstellt, um sicherzustellen, dass der Modus des ersten Dauerstrich-Ausgangsfelds (4) mit dem des ersten optischen Slave-Verstärker mit Resonanzringhohlraum (5) übereinstimmt.

5. Ein Lasersystem (1, 31) nach einem der vorhergehenden Ansprüche, wobei das Lasersystem (1) zudem einen ersten Frequenzkopplungs-Regelkreis (14, 20) umfasst, um die Frequenz des zweiten Dauerstrich-Ausgangsfelds (12) mit der Frequenz des ersten Dauerstrich-Ausgangsfelds (4) zu koppeln.

6. Ein Lasersystem (31) nach einem der vorhergehenden Ansprüche, wobei das Lasersystem zudem einen zweiten optischen Slave-Verstärker mit Resonanzringhohlraum (5b) umfasst, der ein Ti:Saphir-Verstärkungsmedium (10) umfasst, das im freien Betrieb ein drittes Dauerstrich-Ausgangsfeld (12b) mit einer dritten Frequenz (f₃) und einer dritten Leistung (P₃) erzeugt, wobei der zweite optische Slave-Verstärker mit Resonanzringhohlraum (5b) so konfiguriert ist, dass ein Bruchteil des kombinierten ersten (4) und zweiten (12) Dauerstrich-Ausgangsfelds in den zweiten optischen Slave-Verstärker mit Resonanzringhohlraum (5b) injiziert wird, um den zweiten optischen Slave-Verstärker mit Resonanzringhohlraum (5b) anzuregen, was dazu führt, dass das dritte Dauerstrich-Ausgangsfeld (12b) die gleiche Frequenz (f1) hat wie das erste Dauerstrich-Ausgangsfeld (4) und ein Rest des kombinierten ersten (4) und zweiten (12) Dauerstrich-Ausgangsfelds mit dem dritten Dauerstrich-Ausgangsfeld (12b) kombiniert wird und ein einziges Ausgangsfeld (32) für das Lasersystem (1) mit der ersten Frequenz (f₁) und einer Leistung (Pₒᵤₜ) bildet, die im Wesentlichen gleich der Summe der ersten (P₁), zweiten (P₂) und dritten (P₃) Leistung ist.

7. Ein Lasersystem (31) nach Anspruch 6, wobei das Lasersystem (31) zudem ein zweites Injektionsverriegelungsmodul (7b) umfasst, das sich in einem optischen Pfad zwischen dem ersten (5) und dem zweiten (5b) optischen Verstärker befindet, wobei das zweite Injektionsverriegelungsmodul (7b) ein Mittel bereitstellt, um sicherzustellen, dass der Modus des kombinierten ersten (4) und zweiten (12) Dauerstrich-Ausgangsfelds mit dem des zweiten optischen Verstärkers (5b) übereinstimmt.

8. Ein Lasersystem nach einem der Ansprüche 6 oder 7, wobei das Lasersystem zudem einen zweiten Frequenzkopplungs-Regelkreis (14b, 20b) umfasst, um die Frequenz des dritten Dauerstrich-Ausgangsfelds (12b) mit der Frequenz des zweiten Dauerstrich-Ausgangsfelds (12) zu koppeln.

9. Ein Verfahren zum Kombinieren von zwei oder mehr optischen Feldern (4. 12. 12b), wobei das Verfahren Folgendes umfasst:
Bereitstellung eines Masterlasers (2), der ein Ti:Saphir-Verstärkungsmedium umfasst, um ein erstes Dauerstrich-Ausgangsfeld (4) mit einer Frequenz (f₁) und einer ersten Leistung (P₁) zu erzeugen;
Bereitstellung eines ersten optischen Slave-Verstärkers mit Resonanzringhohlraum (5), der ein Ti:Saphir-Verstärkungsmedium (10) in einem Arm davon umfasst, um im freien Betrieb ein zweites Dauerstrich-Ausgangsfeld (12) mit einer zweiten Frequenz (f₂) und einer zweiten Leistung (P₂) zu erzeugen, und
**gekennzeichnet durch**
Konfiguration des ersten optischen Slave-Verstärkers mit Resonanzringhohlraum (5) zum Einspeisen eines Bruchteils des ersten Dauerstrich-Ausgangsfelds (4) in den ersten optischen Slave-Verstärker mit Resonanzringhohlraum (5), um den ersten optischen Slave-Verstärker mit Resonanzringhohlraum (5) anzuregen und damit zu bewirken, dass das zweite Dauerstrich-Ausgabefeld (12) die gleiche Frequenz (f₁) wie das erste Dauerstrich-Ausgabefeld (4) hat, und Kombinieren eines Rests des ersten Dauerstrich-Ausgabefelds (4) mit dem zweiten kontinuierlichen Ausgangsfeld (12), um ein einziges Ausgangsfeld mit der ersten Frequenz (f₁) und einer Leistung (Pₒᵤₜ) zu bilden, die im Wesentlichen gleich der Summe der ersten (P₁) und der zweiten Leistung (P₂) ist.

10. Ein Verfahren zum Kombinieren von zwei oder mehr optischen Feldern (4. 12. 12b) nach Anspruch 9, wobei die zweite Leistung (P₂) im Bereich 0,5 P₁ < P₂ < 1,5 P₁ liegt.

11. Ein Verfahren zum Kombinieren von zwei oder mehr optischen Feldern (4. 12. 12b) nach einem der Ansprüche 9 oder 10, wobei das Verfahren zudem die Anpassung des Modus des ersten Dauerstrich-Ausgangsfelds (4) an den des ersten optischen Slave-Verstärkers mit Resonanzringhohlraum (5) umfasst.

12. Ein Verfahren zum Kombinieren von zwei oder mehr optischen Feldern (4. 12. 12b) nach einem der Ansprüche 9 bis 11, wobei das Verfahren zudem die Frequenzverriegelung des ersten optischen Verstärkers (5) mit der Frequenz des ersten Dauerstrich-Ausgangsfelds (4) umfasst.

13. Ein Verfahren zum Kombinieren von zwei oder mehr optischen Feldern (4. 12. 12b) nach einem der Ansprüche 9 bis 12, wobei das Verfahren zudem die Bereitstellung eines zweiten optischen Slave-Verstärkers mit Resonanzringhohlraum (5b) umfasst, der ein Ti:Saphir-Verstärkungsmedium (10) umfasst, um im freien Betrieb ein drittes Dauerstrich-Ausgangsfeld (12b) mit einer dritten Frequenz (f₃) und einer dritten Leistung (P₃) zu erzeugen
Konfiguration des zweiten optischen Slave-Verstärkers mit Resonanzringhohlraum (5b) so, dass ein Bruchteil des kombinierten ersten (4) und zweiten (12) Dauerstrich-Ausgangsfelds in den zweiten optischen Slave-Verstärker mit Resonanzringhohlraum (5b) injiziert wird, um den zweiten optischen Slave-Verstärker mit Resonanzringhohlraum (5b) anzuregen, was dazu führt, dass das dritte Dauerstrich-Ausgangsfeld (12b) die gleiche Frequenz (f₁) wie das erste Dauerstrich-Ausgangsfeld (4) hat, und Kombinieren eines Rests des kombinierten ersten (4) und zweiten (12) Dauerstrich-Ausgangsfelds mit dem dritten Dauerstrich-Ausgangsfeld (12b), wobei ein einziges Ausgangsfeld (32) mit der ersten Frequenz (f₁) und einer Leistung (Pₒᵤₜ) gebildet wird, die im Wesentlichen der Summe der ersten (P₁), zweiten (P₂) und dritten (P₃) Leistung entspricht.

14. Ein Verfahren zum Kombinieren von zwei oder mehr optischen Feldern (4. 12. 12b) nach Anspruch 13, wobei das Verfahren zudem die Anpassung des Modus des kombinierten ersten (4) und zweiten (12) Dauerstrich-Ausgangsfelds an den des zweiten optischen Verstärkers (5b) umfasst.

15. Ein Verfahren zum Kombinieren von zwei oder mehr optischen Feldern (4. 12. 12b) nach einem der Ansprüche 13 oder 14, wobei das Verfahren zudem die Frequenzverriegelung des zweiten optischen Verstärkers (5b) mit der Frequenz des zweiten (12) Dauerstrich-Ausgangsfelds umfasst.

## Revendications

1. Un système laser (1, 31) comprenant :
un laser maître (2), le laser maître (2) comprenant un milieu de gain titane-saphir qui génère un premier champ de sortie à ondes continues (4) présentant une première fréquence (f₁) et une première puissance (P₁), et
un premier amplificateur optique esclave à cavité annulaire résonante (5), le premier amplificateur optique esclave à cavité annulaire résonante (5) comprenant un milieu de gain titane-saphir (10) à l'intérieur de l'un de ses bras qui, lorsqu'il fonctionne librement, génère un deuxième champ de sortie à ondes continues (12) présentant une deuxième fréquence (f₂) et une deuxième puissance (P₂),
**caractérisé par le fait que**
le premier amplificateur optique esclave à cavité annulaire résonnante (5) est configuré de sorte qu'une fraction du premier champ de sortie à ondes continues (4) est injectée dans le premier amplificateur optique esclave à cavité annulaire résonnante (5) pour ensemencer le premier amplificateur optique esclave à cavité annulaire résonnante (5), ce qui produit le deuxième champ de sortie à ondes continues (12) présentant la même fréquence (f₁) que le premier champ de sortie à ondes continues (4) et qui fait qu'un reste du premier champ de sortie à ondes continues (4) est combiné au deuxième champ de sortie à ondes continues (12) en formant un champ de sortie unique pour le système laser (1, 31) à la première fréquence (f₁) et à une puissance (Pₒᵤₜ) pratiquement égale à la somme de la première (P₁) et de la deuxième (P₂) puissances.

2. Le système laser (1, 31) de la revendication 1, dans lequel la deuxième puissance (P₂) est comprise entre 0,5 P₁ < P₂ < 1,5 P₁.

3. Le système laser de l'une des revendications 1 ou 2, dans lequel la première puissance (P₁) est supérieure ou égale à 1 watt ou supérieure ou égale à 4 watts.

4. Le système laser (1, 31) de l'une des revendications précédentes, dans lequel le système laser (1) comprend en outre un premier module de verrouillage par injection (7) situé sur un trajet optique entre le laser maître (2) et le premier amplificateur optique esclave à cavité annulaire résonnante (5) et dans lequel le module de verrouillage par injection (7) permet de garantir que le mode du premier champ de sortie à ondes continues (4) est adapté à celui du premier amplificateur optique esclave à cavité annulaire résonnante (5).

5. Le système laser (1, 31) de l'une des revendications précédentes, dans lequel le système laser (1) comprend en outre une première boucle de commande à verrouillage de fréquence (14, 20) pour verrouiller en fréquence le deuxième champ de sortie à ondes continues (12) sur la fréquence du premier champ de sortie à ondes continues (4).

6. Le système laser (31) de l'une des revendications précédentes, dans lequel le système laser comprend en outre un deuxième amplificateur optique esclave à cavité annulaire résonante (5b) comprenant un milieu de gain titane-saphir (10) qui, lorsqu'il fonctionne librement, génère un troisième champ de sortie à ondes continues (12b) présentant une troisième fréquence (f₃) et une troisième puissance (P₃), dans lequel le deuxième amplificateur optique esclave à cavité annulaire résonante (5b) est configuré de sorte qu'une fraction du premier (4) et du deuxième (12) champs de sortie à ondes continues combinés est injectée dans le deuxième amplificateur optique esclave à cavité annulaire résonante (5b) pour ensemencer le deuxième amplificateur optique esclave à cavité annulaire résonante (5b), ce qui produit le troisième champ de sortie à ondes continues (12b) présentant la même fréquence (f₁) que le premier champ de sortie à ondes continues (4) et qui fait qu'un reste du premier (4) et du deuxième (12) champs de sortie à ondes continues combinés est combiné avec le troisième champ de sortie à ondes continues (12b) en formant un champ de sortie unique (32) pour le système laser (1) à la première fréquence (f₁) et à une puissance (Pₒᵤₜ) pratiquement égale à la somme de la première (P₁), de la deuxième (P₂) et de la troisième (P₃) puissances.

7. Le système laser (31) de la revendication 6, dans lequel le système laser (31) comprend en outre un deuxième module de verrouillage par injection (7b) situé sur un trajet optique entre le premier (5) et le deuxième (5b) amplificateurs optiques et dans lequel le deuxième module de verrouillage par injection (7b) permet de garantir que le mode du premier (4) et du deuxième (12) champs de sortie à ondes continues combinés est adapté à celui du deuxième amplificateur optique (5b).

8. Le système laser de l'une des revendications 6 ou 7, dans lequel le système laser comprend en outre une deuxième boucle de commande à verrouillage de fréquence (14b, 20b) pour verrouiller en fréquence le troisième champ de sortie à ondes continues (12b) sur la fréquence du deuxième champ de sortie à ondes continues (12).

9. Un procédé permettant de combiner deux ou plusieurs champs optiques (4. 12. 12b) et consistant à :
fournir un laser maître (2) comprenant un milieu de gain titane-saphir pour générer un premier champ de sortie à ondes continues (4) présentant une première fréquence (f₁) et une première puissance (P₁) ;
fournir un premier amplificateur optique esclave à cavité annulaire résonante (5) comprenant un milieu de gain titane-saphir (10) à l'intérieur de l'un de ses bras pour générer, lorsqu'il fonctionne librement, un deuxième champ de sortie à ondes continues (12) présentant une deuxième fréquence (f₂) et une deuxième puissance (P₂) ; et
**caractérisé par** les étapes consistant à :
configurer le premier amplificateur optique esclave à cavité annulaire résonnante (5) pour injecter une fraction du premier champ de sortie à ondes continues (4) dans le premier amplificateur optique esclave à cavité annulaire résonnante (5) pour ensemencer le premier amplificateur optique esclave à cavité annulaire résonnante (5), ce qui fait que le deuxième champ de sortie à ondes continues (12) présente la même fréquence (f₁) que le premier champ de sortie à ondes continues (4) et qu'un reste du premier champ de sortie à ondes continues (4) est combiné avec le deuxième champ de sortie à ondes continues (12) pour former un champ de sortie unique à la première fréquence (f₁) et à une puissance (Pₒᵤₜ) pratiquement égale à la somme de la première (P₁) et de la deuxième (P₂) puissances.

10. Le procédé permettant de combiner deux ou plusieurs champs optiques (4. 12. 12b) de la revendication 9, dans lequel la deuxième puissance (P₂) est comprise entre 0,5 P₁ < P₂ < 1,5 P₁.

11. Le procédé permettant de combiner deux ou plusieurs champs optiques (4. 12. 12b) de l'une des revendications 9 ou 10, consistant en outre à adapter le mode du premier champ de sortie à ondes continues (4) à celui du premier amplificateur optique esclave à cavité annulaire résonante (5).

12. Le procédé permettant de combiner deux ou plusieurs champs optiques (4. 12. 12b) de l'une des revendications 9 à 11, consistant en outre à verrouiller en fréquence le premier amplificateur optique (5) sur la fréquence du premier champ de sortie à ondes continues (4).

13. Le procédé permettant de combiner deux ou plusieurs champs optiques (4. 12. 12b) de l'une des revendications 9 à 12, consistant en outre à fournir un deuxième amplificateur optique esclave à cavité annulaire résonnante (5b) comprenant un milieu de gain titane-saphir (10) pour générer, lorsqu'il fonctionne librement, un troisième champ de sortie à ondes continues (12b) présentant une troisième fréquence (f₃) et une troisième puissance (P₃)
et à configurer le deuxième amplificateur optique esclave à cavité annulaire résonnante (5b) de sorte qu'une fraction du premier (4) et du deuxième (12) champs de sortie à ondes continues combinés est injectée dans le deuxième amplificateur optique esclave à cavité annulaire résonante (5b) pour ensemencer le deuxième amplificateur optique esclave à cavité annulaire résonante (5b), ce qui produit le troisième champ de sortie à ondes continues (12b) présentant la même fréquence (f₁) que le premier champ de sortie à ondes continues (4) et qui fait qu'un reste du premier (4) et du deuxième (12) champs de sortie à ondes continues combinés est combiné avec le troisième champ de sortie à ondes continues (12b) en formant un champ de sortie unique (32) à la première fréquence (f₁) et à une puissance (Pₒᵤₜ) pratiquement égale à la somme de la première (P₁), de la deuxième (P₂) et de la troisième (P₃) puissances.

14. Le procédé permettant de combiner deux ou plusieurs champs optiques (4. 12. 12b) de la revendication 13, consistant en outre à adapter le mode du premier (4) et du deuxième (12) champs de sortie à ondes continues combinés à celui du deuxième amplificateur optique (5b).

15. Le procédé permettant de combiner deux ou plusieurs champs optiques (4. 12. 12b) de l'une des revendications 13 ou 14, consistant en outre à verrouiller en fréquence le deuxième amplificateur optique (5b) sur la fréquence du deuxième (12) champ de sortie à ondes continues.
